# FASCICULE DE BREVET EUROPEEN

(11) **EP 1 222 594 B1**
(45) Date de publication et mention de la délivrance du brevet: **18.06.2003**
(21) Numéro de dépôt: 00966261.0
(22) Date de dépôt: 03.10.2000
(51) Int. Cl.: G06F 17/60, G09B 5/06, G09B 5/14

(54) **PROCEDE ET SYSTEME POUR DIFFUSER DES INFORMATIONS PROVENANT D'UNE BASE DE DONNEES**
VERFAHREN UND SYSTEM ZUM AUSSENDEN VON INFORMATIONEN AUS EINER DATENBANK
METHOD AND SYSTEM FOR DIFFUSING DATA DERIVED FROM A DATABASE

(30) Priorité: 04.10.1999 FR 9912360; 22.03.2000 FR 0003624
(43) Date de publication de la demande: 17.07.2002
(73) Titulaire: Memopage.Com, 75007 Paris (FR)
(72) Inventeur: NOAILLES, Patrice, F-75007 Paris (FR); PROST, Bernard, F-71570 Chaintre (FR)
(74) Mandataire: Grynwald, Albert
(86) Numéro de dépôt international: FR0002735
(87) Numéro de publication internationale: WO01025983

(56) Documents cités:
- ANONYMOUS: "SmartUpdate Developers Guide" INTERNET DOCUMENT, [en ligne] 11 mars 1999 (1999-03-11), XP002155600 Extrait de l'Internet: <URL:http://Developer.netscape.com/docs/ma nuals/jarman/index.htm> [extrait le 2000-12-11]
- ANONYMOUS: "PSUtils" INTERNET DOCUMENT, [en ligne] 30 juillet 1999 (1999-07-30), pages 1-14, XP002155601 Extrait de l'Internet: <URL:http://www.dcs.ed.ac.uk/home/ajcd/psu tils> [extrait le 2000-12-07]
- DEMAILLE A ET AL: "GNU a2ps, version 4.12, General Purpose Postscript Generating Utility" INTERNET DOCUMENT, 9 février 1999 (1999-02-09), XP002140988
- ANONYMOUS: "Adobe Acrobat Reader 3.0, Online Guide" INTERNET DOCUMENT, [en ligne] 8 octobre 1996 (1996-10-08), XP002155602 Extrait de l'Internet: <URL:http://shadow.uncg.edu/pvt/pdf-docume nts/reader.pdf> [extrait le 2000-12-11]

## Description

La présente invention concerne un procédé pour diffuser des informations contenues dans une base de données informatique sous une forme aisément transportable, manipulable et jetable par un utilisateur.

En général, les utilisateurs de bases de données consultent celles-ci à partir d'équipements informatiques. Ces équipements informatiques disposent d'un écran de visualisation permettant aux utilisateurs de lire les données dont ils ont besoin.

Cependant, bien souvent, les utilisateurs de bases de données souhaiteraient pouvoir conserver des informations essentielles sous une forme qui leur permettrait de les transporter aisément avec eux.

Il existe des imprimantes associées à des équipements informatiques qui permettent d'obtenir des tirages papier de tout ou partie des données apparaissant sur les écrans de visualisation. Ces tirages papier de grand format (format A4) ne sont pas commodes à transporter dans une poche de vêtement. Il est certes possible de les plier mais, dans ce cas, l'information n'est plus rapidement et aisément accessible. Il est, en effet, nécessaire de déplier le support papier.

La solution proposée résout ce problème. L'invention concerne un procédé pour diffuser des informations contenues dans une base de données informatique sous une forme aisément transportable et manipulable par un utilisateur.

Le procédé, selon l'invention, comprend plusieurs étapes.

Il comprend l'étape de fractionner les informations contenues dans la base de données en unités comportant chacune un nombre prédéterminé de signes.

Il comprend en outre l'étape de transmettre les unités vers un équipement informatique connecté à une imprimante, notamment via un serveur et un réseau de communication informatique et/ou via un support d'informations tel que par exemple un compact disque. L'équipement informatique et l'imprimante sont actionnés par l'utilisateur au moyen d'organes de commande tels qu'un clavier et/ou une souris activant des menus optionnels.

Ainsi, l'utilisateur peut accéder en ligne aux unités, sélectionner celles contenant des informations qui l'intéressent, commander l'impression de celles-ci par l'imprimante sur un support imprimable, notamment une ou plusieurs feuilles de papier.

Le procédé comprend en outre l'étape de charger, notamment au moyen d'un compact disque, ou de télécharger, notamment via le réseau de communication informatique, dans l'équipement informatique, des moyens logiciels d'impression appropriés pour imprimer avec l'imprimante un mémo se présentant sous la forme d'un livret de quatre pages.

De préférence, selon l'invention, les moyens logiciels d'impression mettent en oeuvre un processus d'impression comportant l'étape d'imprimer chaque unité sur le recto d'une feuille. Les signes contenus dans chaque unité sont fractionnés en quatre pavés numérotés de 1 à 4 selon l'ordre des pages du livret. Les quatre pavés sont disposés sur le recto de la feuille de telle sorte que les pavés 1 et 3 ainsi que 2 et 4 soient respectivement situés sur chacune des diagonales de la feuille rectangulaire. Les pavés portant les numéros 2 et 3 sont tournés de 180° par rapport aux pavés portant les numéros 1 et 4.

Ainsi, après pliage, l'utilisateur dispose d'un livret de quatre pages.

Selon une première variante de réalisation de l'invention, pour réaliser un mémo selon un format à l'italienne, à partir d'une feuille au format rectangulaire, notamment au format A4, on plie la feuille imprimée selon une première ligne de pliure sensiblement médiane et parallèle au plus grand coté de la feuille.

Selon une seconde variante de réalisation de l'invention, pour réaliser un mémo selon un format standard, à partir d'une feuille au format rectangulaire, notamment au format A4, on plie la feuille imprimée selon une première ligne de pliure sensiblement médiane et parallèle au plus petit coté de la feuille.

Quelle que soit la variante de réalisation, après pliage, la première pliure solidarise les pages externes 1 et 4 avec les pages internes 2 et 3.

De préférence, selon l'invention, les moyens logiciels d'impression mettent en oeuvre un processus d'impression comportant en outre l'étape d'imprimer des messages publicitaires dans des emplacements réservés à cet effet, notamment disposés verticalement et/ou dans les marges des pavés et/ou dans le pavé numéro 4.

L'invention concerne également un système pour diffuser les informations contenues dans une base de données informatique sous une forme aisément transportable, manipulable et jetable par un utilisateur disposant d'un équipement informatique.

Le système, selon l'invention, est caractérisé en ce que les informations sont fractionnées en unités comportant chacune un nombre prédéterminé de signes.

Le système est, en outre, caractérisé en ce qu'il comprend un serveur connecté à la base de données et à l'équipement informatique, via un réseau de communication informatique du type Internet.

Ainsi, l'utilisateur peut accéder en ligne aux unités et sélectionner celles contenant des informations qui l'intéressent.

Le système, selon l'invention, comprend également une imprimante connectée à l'équipement informatique. L'équipement informatique et l'imprimante sont actionnés par l'utilisateur au moyen d'organes de commande tels qu'un clavier et/ou une souris activant des menus optionnels.

Ainsi, l'utilisateur peut commander l'impression des unités par l'imprimante sur un support imprimable, notamment une ou plusieurs feuilles de papier.

Le système, selon l'invention, comprend enfin des moyens logiciels d'impression susceptibles d'être chargés, notamment au moyen d'un compact disque, ou d'être téléchargés, notamment via le réseau de communication informatique, dans l'équipement informatique. Les moyens logiciels d'impression sont appropriés pour imprimer avec l'imprimante un mémo se présentant sous la forme d'un livret de quatre pages.

De préférence, selon l'invention, les moyens logiciels d'impression comportent des moyens pour imprimer chaque unité sur le recto d'une feuille. Les signes contenus dans chaque unité sont fractionnés en quatre pavés numérotés de 1 à 4 selon l'ordre des pages du livret. Les quatre pavés sont disposés sur le recto de la feuille de telle sorte que les pavés 1 et 3 ainsi que 2 et 4 soient respectivement situés sur chacune des diagonales de la feuille rectangulaire. Les pavés portant les numéros 2 et 3 sont tournés de 180° par rapport aux pavés portant les numéros 1 et 4.

Ainsi, après pliage, l'utilisateur dispose d'un livret de quatre pages.

Selon une première variante de réalisation de l'invention, pour réaliser un mémo selon un format à l'italienne, à partir d'une feuille au format rectangulaire, notamment au format A4, la feuille imprimée comporte une première ligne de pliure sensiblement médiane et parallèle au plus grand coté de la feuille.

Selon une seconde variante de réalisation de l'invention, pour réaliser un mémo selon un format standard, à partir d'une feuille au format rectangulaire, notamment au format A4, la feuille imprimée comporte une première ligne de pliure sensiblement médiane et parallèle au plus petit coté de la feuille.

Ainsi, quelle que soit la variante de réalisation, après pliage, la première pliure solidarise les pages externes 1 et 4 avec les pages internes 2 et 3.

De préférence, les moyens logiciels d'impression comportent des moyens pour imprimer des messages publicitaires dans des emplacements réservés à cet effet, notamment disposés verticalement et/ou dans les marges des pavés et/ou dans le pavé numéro 4.

L'invention concerne également un terminal informatique connecté à un réseau de communication informatique du type Internet, adapté pour diffuser des informations contenues dans une base de données informatique sous une forme aisément transportable et manipulable par un utilisateur disposant d'un tel terminal informatique.

Les informations sont fractionnées en unités comportant chacune un nombre prédéterminé de signes.

Les informations parviennent au terminal informatique en provenance de la base de données, via un serveur et via le réseau de communication informatique et/ou via un support d'informations, tel que par exemple un compact disque.

Ainsi, l'utilisateur peut accéder en ligne aux unités et sélectionner celles contenant des informations qui l'intéressent.

Le terminal informatique est caractérisé en ce qu'il comporte, d'une part, un équipement informatique et, d'autre part, une imprimante connectée à l'équipement informatique.

L'équipement informatique et l'imprimante sont actionnés par l'utilisateur au moyen d'organes de commande tels qu'un clavier et/ou une souris activant des menus optionnels.

Ainsi, l'utilisateur peut commander l'impression des unités par l'imprimante sur un support imprimable, notamment une ou plusieurs feuilles de papier.

L'équipement informatique comprend en outre des moyens logiciels d'impression susceptibles d'être chargés, notamment au moyen d'un compact disque, ou d'être téléchargés, notamment via le réseau de communication informatique, dans l'équipement informatique.

Les moyens logiciels d'impression sont appropriés pour imprimer avec l'imprimante un mémo se présentant sous la forme d'un livret de quatre pages.

De préférence, les moyens logiciels d'impression comportent des moyens pour imprimer chaque unité sur le recto d'une feuille. Les signes contenus dans chaque unité sont fractionnés en quatre pavés numérotés de 1 à 4 selon l'ordre des pages du livret. Les quatre pavés sont disposés sur le recto de la feuille de telle sorte que les pavés 1 et 3 ainsi que 2 et 4 soient respectivement situés sur chacune des diagonales de la feuille rectangulaire. Les pavés portant les numéros 2 et 3 sont tournés de 180° par rapport aux pavés portant les numéros 1 et 4.

Ainsi, après pliage, l'utilisateur dispose d'un livret de quatre pages.

Selon une première variante de réalisation de l'invention, pour réaliser un mémo selon un format à l'italienne, à partir d'une feuille au format rectangulaire, notamment au format A4, la feuille imprimée comporte une première ligne de pliure sensiblement médiane et parallèle au plus grand coté de la feuille.

Selon une seconde variante de réalisation de l'invention, pour réaliser un mémo selon un format standard, à partir d'une feuille au format rectangulaire, notamment au format A4, la feuille imprimée comporte une première ligne de pliure sensiblement médiane et parallèle au plus petit coté de la feuille.

Ainsi, quelle que soit la variante de réalisation, après pliage, la première pliure solidarise les pages externes 1 et 4 avec les pages internes 2 et 3.

De préférence, les moyens logiciels d'impression comportent des moyens pour imprimer des messages publicitaires dans des emplacements réservés à cet effet, notamment disposés verticalement et/ou dans les marges des pavés et/ou dans le pavé numéro 4.

D'autres caractéristiques et avantages de l'invention apparaîtront à la lecture de la description de variantes de réalisation de l'invention, données à titre d'exemple indicatif et non limitatif, et de :
la figure 1 qui représente une vue schématique d'ensemble d'une variante de réalisation du système selon l'invention,
la figure 2a qui représente une vue avant pliage d'une feuille sur laquelle sont imprimées les connaissances élémentaires,
la figure 2b qui représente une vue avant pliage d'une autre variante de réalisation d'une feuille sur laquelle sont imprimées les connaissances élémentaires,
la figure 3a qui représente une vue d'un livret de quatre pages, au format standard, résultant du pliage de la feuille représentée sur la figure 2a,
la figure 3b qui représente une vue d'un livret de quatre pages, au format "à l'italienne", résultant du pliage de la feuille représentée sur la figure 2b.

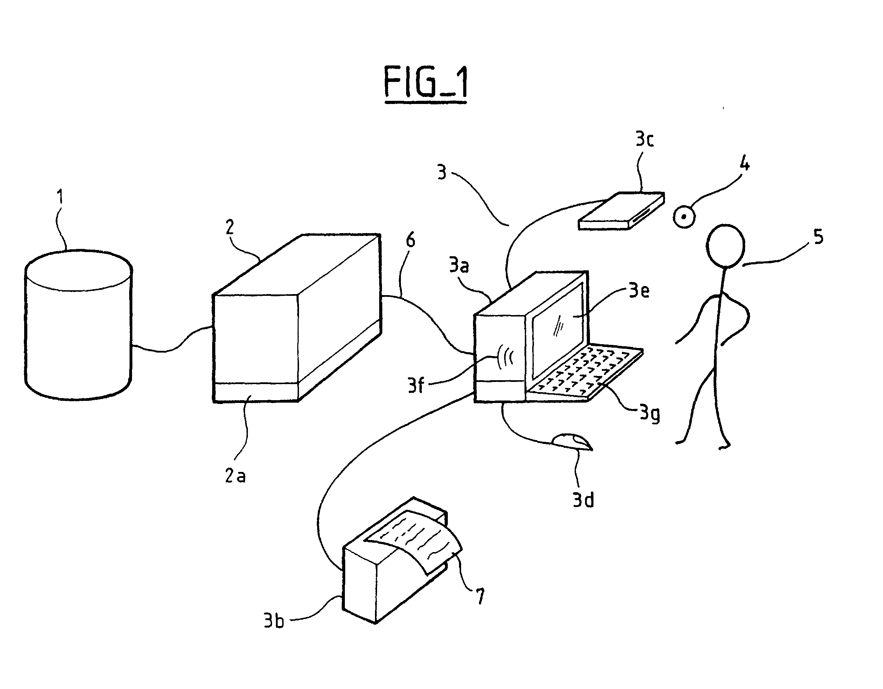

Sur la figure 1 on a représenté une vue schématique d'ensemble d'une variante de réalisation du système selon l'invention.

Le système comprend un serveur informatique 2 associé à une base de données 1 contenant des informations. Ces informations sont fractionnées en unités comportant chacune un nombre prédéterminé de signes. Ainsi, le fractionnement permet de définir la mise en page des unités de manière précise afin d'en faciliter l'impression sur un support imprimable, notamment une ou plusieurs feuilles de papier ou un support plastifié.

Le système comprend également un équipement informatique 3. Cet équipement informatique 3 comporte un micro-ordinateur 3a comprenant des moyens de visualisation 3e, un clavier 3g, une souris 3d et des moyens d'écoute auditive 3f. Une imprimante 3b ainsi que des moyens de lecture de compact disque 3c sont associés au micro-ordinateur 3a. L'équipement informatique 3 peut également se présenter sous la forme d'une console de jeux multimédia, notamment du type Sega Dreamcast ou Playstation 2, connectée à un clavier et à un écran de télévision.

Le serveur informatique 2 et l'équipement informatique 3 sont interconnectés via un réseau de communication informatique 6, notamment du type Internet. Les unités contenues dans la base de données 1 sont transmises vers l'équipement informatique 3 via le serveur 2 et le réseau de communication 6. Ainsi, un utilisateur 5 peut accéder en ligne aux unités contenues dans la base de données 1 de façon automatisée et rapide et sélectionner celles contenant des informations qui l'intéressent.

Les unités peuvent également être transmises vers l'équipement informatique 3 via un compact disque 4 qui sera lu au moyen du lecteur 3c et consulté au moyen de l'écran de visualisation 3e.

L'édition d'un mémo permet à l'utilisateur de conserver sur lui les informations d'une unité sur un support imprimable, notamment une ou plusieurs feuilles de papier. A cet effet, le système comprend également des moyens de téléchargement 2a via le serveur 2 et le réseau informatique 6 pour charger dans ledit équipement informatique 3 des moyens logiciels d'impression. Ces moyens logiciels d'impression peuvent également être chargés dans l'équipement informatique 3 via un compact disque 4 qui sera lu au moyen du lecteur 3c.

On va maintenant décrire comment ces moyens logiciels d'impression coopèrent avec l'imprimante 3b associée à l'équipement informatique 3, pour imprimer un mémo sur un support imprimable, notamment un mémo papier 7.

Les moyens logiciels d'impression contiennent les instructions nécessaires pour diviser en quatre blocs (pavés) d'écriture (éventuellement de même taille) les signes que contient l'unité à imprimer. Ces blocs sont référencés 1, 2, 3, 4 dans l'ordre logique de lecture. Ils sont destinés à être imprimés uniquement sur le recto du support imprimable, notamment le recto d'une feuille de papier 20a, 20b.

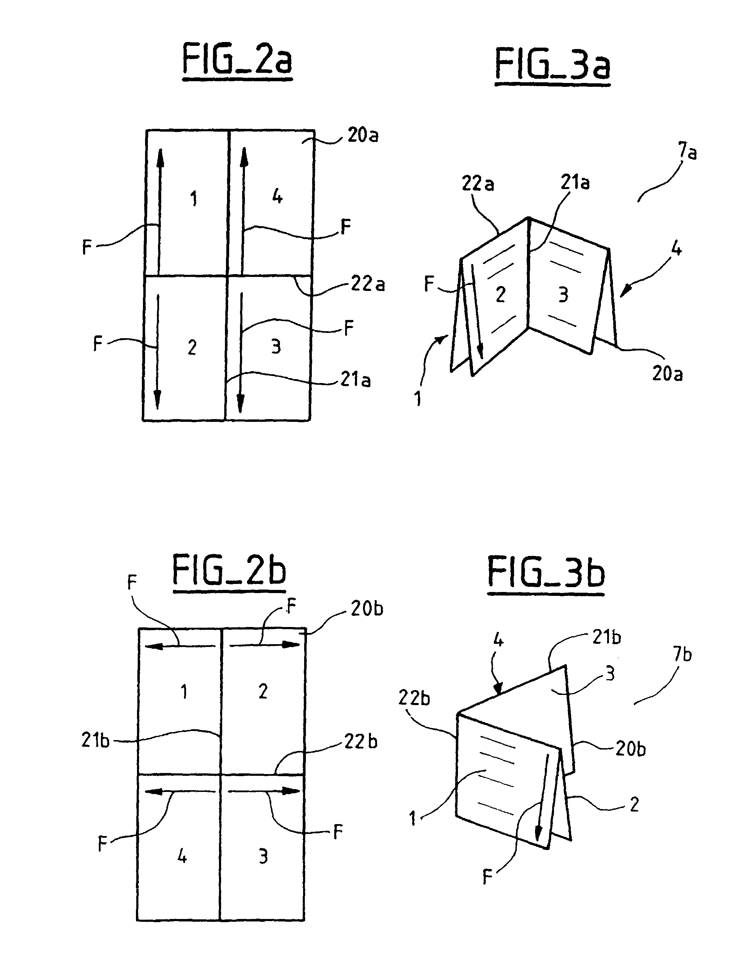

On a représenté sur les figures 2a et 3a la feuille de papier 20a avant et après pliage, dans le cas d'un mémo au format standard 7a.

De même, on a représenté sur les figures 2b et 3b la feuille de papier 20b avant et après pliage, dans le cas d'un mémo au format "à l'italienne" 7b.

Dans le cas d'un mémo 7a au format standard, les moyens logiciels contiennent des instructions pour imprimer les blocs 1 à 4 comme il est indiqué sur la figure 2a. Les blocs 2 et 4 sont situés sur une même diagonale. Les blocs 1 et 3 sont situés sur l'autre diagonale. Les blocs 1 et 4 sont imprimés sur la partie supérieure de la feuille 20a. Les blocs 2 et 3 sont imprimés sur la partie inférieure de la feuille 20a. Les flèches F indiquent le sens de l'ordre logique de lecture selon lequel chaque bloc 1 à 4 doit être imprimé. Les flèches F sont parallèles au plus grand côté de la feuille 20a. Sur la feuille 20a, le sens de lecture des blocs 1 et 4 est à l'opposé du sens de lecture des blocs 2 et 3. Les blocs 1 et 4 d'une part et les blocs 2 et 3 d'autre part sont imprimés de part et d'autre de la ligne médiane 22a parallèle au plus petit côté de la feuille 20a. Les blocs 1 et 2 d'une part et les blocs 4 et 3 d'autre part sont imprimés de part et d'autre de la ligne médiane 21a parallèle au plus grand côté de la feuille 20a. Les références 1 à 4 reportées sur la feuille 20a indiquent l'emplacement des blocs. Pour obtenir un mémo au format standard 7a (figure 3a), on plie la feuille 20a, en premier selon la ligne de pliure 22a puis en second, selon la ligne de pliure 21a. Ainsi, après pliage, on obtient un mémo au format standard 7a de quatre pages.

Dans le cas d'un mémo 7b au format "à l'italienne", les moyens logiciels contiennent des instructions pour imprimer les blocs 1 à 4 comme il est indiqué sur la figure 2b. Les blocs 2 et 4 sont situés sur une même diagonale. Les blocs 1 et 3 sont situés sur l'autre diagonale. Les blocs 1 et 2 sont imprimés sur la partie supérieure de la feuille 20b. Les blocs 4 et 3 sont imprimés sur la partie inférieure de la feuille 20b. Les flèches F indiquent le sens de l'ordre logique de lecture selon lequel chaque bloc 1 à 4 doit être imprimé. Les flèches F sont parallèles au plus petit côté de la feuille 20b. Sur la feuille 20b, le sens de lecture des blocs 1 et 4 est à l'opposé du sens de lecture des blocs 2 et 3. Les blocs 1 et 2 d'une part et les blocs 4 et 3 d'autre part sont imprimés de part et d'autre de la ligne médiane 22b parallèle au plus petit côté de la feuille 20b. Les blocs 1 et 4 d'une part et les blocs 2 et 3 d'autre part sont imprimés de part et d'autre de la ligne médiane 21b parallèle au plus grand côté de la feuille 20b. Les références 1 à 4 reportées sur la feuille 20b indiquent l'emplacement des blocs. Pour obtenir un mémo au format "à l'italienne" 7b (figure 3b), on plie la feuille 20b, en premier selon la ligne de pliure 21b puis en second, selon la ligne de pliure 22b. Ainsi, après pliage, on obtient un mémo au format "à l'italienne" 7b de quatre pages.

Dans le cas d'un mémo 7a au format standard, comme dans le cas d'un mémo 7b au format "à l'italienne", de préférence on indique les lignes de pliure par des marques, notamment des pointillés afin de faciliter le pliage. De préférence également, on renforce la solidarisation des feuillets du livret après pliage en déposant une substance adhésive aux emplacements appropriés du verso de la feuille. Également, afin de faciliter la manipulation du livret, on plie la feuille, selon la première ligne de pliure, en rabattant la partie inférieure sur la partie supérieure. On obtient ainsi un livret dont les bords inférieurs sont solidaires. Bien entendu, dans ce cas, il convient de disposer les blocs 1, 2, 3, 4 de telle sorte qu'ils soient lus, après pliage, selon l'ordre logique de lecture.

## Revendications

1. Procédé pour diffuser les informations contenues dans une base de données informatique (1) sous une forme aisément transportable, manipulable et jetable par un utilisateur (5) ;
ledit procédé étant **caractérisé en ce qu'**il comprend les étapes suivantes :
- l'étape de fractionner les informations contenues dans la base de données (1) en unités comportant chacune un nombre prédéterminé de signes,
- l'étape de transmettre lesdites unités, via notamment un serveur (2) et un réseau de communication informatique (6) et/ou via un support d'information tel que par exemple un compact disque (4), vers un équipement informatique (3) connecté à une imprimante (3b) ; ledit équipement informatique (3) et ladite imprimante (3b) étant actionnés par l'utilisateur (5) au moyen d'organes de commande tels qu'un clavier (3g) et/ou une souris (3d) activant des menus optionnels ;
de sorte que l'utilisateur peut accéder en ligne auxdites unités, sélectionner celles contenant des informations qui l'intéressent, commander l'impression de celles-ci par l'imprimante sur un support imprimable, notamment une ou plusieurs feuilles de papier,
ledit procédé comprenant en outre l'étape de charger, notamment au moyen d'un compact disque (4), ou de télécharger dans ledit équipement informatique (3), notamment via ledit réseau de communication informatique (6), des moyens logiciels d'impression (2a) appropriés pour imprimer avec ladite imprimante (3b) un mémo (7) se présentant sous la forme d'un livret de quatre pages.

2. Procédé selon la revendication 1 tel que lesdits moyens logiciels d'impression (2a) mettent en oeuvre un processus d'impression comportant l'étape d'imprimer chaque unité sur le recto d'une feuille
• en fractionnant les signes contenus dans chaque unité en quatre pavés numérotés de 1 à 4 selon l'ordre des pages du livret,
• en disposant sur le recto de la feuille les quatre pavés de telle sorte que les pavés 1 et 3 ainsi que 2 et 4 soient respectivement situés sur chacune des diagonales de la feuille rectangulaire
• en faisant tourner de 180° les pavés portant les numéros 2 et 3 par rapport aux pavés portant les numéros 1 et 4
de sorte que, après pliage, l'utilisateur dispose d'un livret de quatre pages.

3. Procédé selon la revendication 2 tel que pour réaliser à partir d'une feuille au format rectangulaire, notamment au format A4,
• un mémo (7b) selon un format à l'italienne, on plie la feuille imprimée selon une première ligne de pliure (21b) sensiblement médiane parallèle au plus grand coté de la feuille,
• un mémo (7a) selon un format standard, on plie la feuille imprimée selon une première ligne de pliure (22a) sensiblement médiane parallèle au plus petit coté de la feuille,
de sorte que, après pliage, la première pliure solidarise les pages externes 1 et 4 avec les pages internes 2 et 3.

4. Procédé selon l'une quelconque des revendications 1 à 3 tel que lesdits moyens logiciels d'impression (2a) mettent en oeuvre un processus d'impression comportant en outre l'étape d'imprimer des messages publicitaires dans des emplacements réservés à cet effet, notamment disposés verticalement et/ou dans les marges des pavés et/ou dans le pavé numéro 4.

5. Système pour diffuser les informations contenues dans une base de données (1) informatique sous une forme aisément transportable, manipulable et jetable par un utilisateur disposant d'un équipement informatique (3) ;
ledit système étant **caractérisé en ce que** :
- lesdites informations sont fractionnées en unités comportant chacune un nombre prédéterminé de signes ;
ledit système étant en outre **caractérisé en ce qu'**il comprend :
- un serveur (2) connecté, via un réseau de communication informatique (6) du type Internet, à ladite base de données (1) et audit équipement informatique (3),
de sorte que l'utilisateur peut accéder en ligne auxdites unités et sélectionner celles contenant des informations qui l'intéressent,
- une imprimante (3b) connectée audit équipement informatique (3) ;
ledit équipement informatique (3) et ladite imprimante (3b) étant actionnés par l'utilisateur (5) au moyen d'organes de commande tels qu'un clavier (3g) et/ou une souris (3d) activant des menus optionnels,
de sorte que l'utilisateur peut commander l'impression desdites unités par l'imprimante sur un support imprimable, notamment une ou plusieurs feuilles de papier;
ledit système comprenant en outre :
- des moyens logiciels d'impression (2a) susceptibles d'être chargés, notamment au moyen d'un compact disque (4), ou d'être téléchargés dans ledit équipement informatique (3), notamment via ledit réseau de communication informatique (6) ;
lesdits moyens logiciels d'impression (2a) étant appropriés pour imprimer avec ladite imprimante (3b) un mémo (7) se présentant sous la forme d'un livret de quatre pages.

6. Système selon la revendication 5 tel que lesdits moyens logiciels d'impression (2a) comportent des moyens pour imprimer chaque unité sur le recto d'une feuille
• en fractionnant les signes contenus dans chaque unité en quatre pavés numérotés de 1 à 4 selon l'ordre des pages du livret,
• en disposant sur le recto de la feuille les quatre pavés de telle sorte que les pavés 1 et 3 ainsi que 2 et 4 soient respectivement situés sur chacune des diagonales de la feuille rectangulaire,
• en faisant tourner de 180° les pavés portant les numéros 2et 3, par rapport aux pavés portant les numéros 1et 4.
(de sorte que, après pliage, l'utilisateur dispose d'un livret de quatre pages).

7. Système selon la revendication 6 tel que pour réaliser à partir d'une feuille rectangulaire, notamment au format A4,
• un mémo (7b) selon un format à l'italienne, ladite feuille imprimée comporte une première ligne de pliure (21b) sensiblement médiane parallèle au plus grand coté de la feuille rectangulaire,
• un mémo (7a) selon un format standard, ladite feuille imprimée comporte une première ligne de pliure (22a) sensiblement médiane parallèle au plus petit coté de la feuille rectangulaire,
de sorte que, après pliage, la première pliure solidarise les pages externes 1 et 4 avec les pages internes 2 et 3.

8. Système selon l'une quelconque des revendications 5 à 7 tel que lesdits moyens logiciels d'impression (2a) comportent des moyens pour imprimer des messages publicitaires dans des emplacements réservés à cet effet, notamment disposés verticalement et/ou dans les marges des pavés et/ou dans le pavé numéro 4.

9. Terminal informatique connecté à un réseau de communication informatique (6) du type Internet, adapté pour diffuser des informations contenues dans une base de données informatique (1) sous une forme aisément transportable et manipulable par un utilisateur (5) disposant d'un tel terminal informatique ;
lesdites informations étant fractionnées en unités comportant chacune un nombre prédéterminé de signes ;
lesdites informations parvenant audit terminal informatique en provenance de ladite base de données (1) via un serveur (2) et ledit réseau de communication informatique (6) et/ou via un support d'information tel que par exemple un compact disque (4)
de sorte que l'utilisateur peut accéder en ligne auxdites unités et sélectionner celles contenant des informations qui l'intéressent,
ledit terminal informatique étant **caractérisé en ce qu'**il comporte :
- un équipement informatique (3),
- une imprimante (3b) connectée audit équipement informatique (3) ;
ledit équipement informatique (3) et ladite imprimante (3b) étant actionnés par l'utilisateur (5) au moyen d'organes de commande tels qu'un clavier (3g) et/ou une souris (3d) activant des menus optionnels,
de sorte que l'utilisateur peut commander l'impression desdites unités par l'imprimante sur un support imprimable, notamment une ou plusieurs feuilles de papier;
ledit équipement informatique (3) comprenant en outre des moyens logiciels d'impression (2a) susceptibles d'être chargés, notamment au moyen d'un compact disque (4), ou d'être téléchargés dans ledit équipement informatique (3), notamment via ledit réseau de communication informatique (6) ; lesdits moyens logiciels d'impression (2a) étant appropriés pour imprimer avec ladite imprimante (3b) un mémo (7) se présentant sous la forme d'un livret de quatre pages.

10. Terminal informatique selon la revendication 9 tel que lesdits moyens logiciels d'impression (2a) comportent des moyens pour imprimer chaque unité sur le recto d'une feuille
• en fractionnant les signes contenus dans chaque unité en quatre pavés numérotés de 1 à 4 selon l'ordre des pages du livret,
• en disposant sur le recto de la feuille les quatre pavés de telle sorte que les pavés 1 et 3 ainsi que 2 et 4 soient respectivement situés sur chacune des diagonales de la feuille rectangulaire,
• en faisant tourner de 180° les pavés portant les numéros 2et 3, par rapport aux pavés portant les numéros let 4,
de sorte que, après pliage, l'utilisateur dispose d'un livret de quatre pages.

11. Terminal informatique selon la revendication 10 tel que pour réaliser à partir d'une feuille rectangulaire, notamment au format A4,
• un mémo (7b) selon un format à l'italienne, ladite feuille imprimée comporte une première ligne de pliure (21b) sensiblement médiane parallèle au plus grand coté de la feuille rectangulaire,
• un mémo (7a) selon un format standard, ladite feuille imprimée comporte une première ligne de pliure (22a) sensiblement médiane parallèle au plus petit coté de la feuille rectangulaire,
de sorte que, après pliage, la première pliure solidarise les pages externes 1 et 4 avec les pages internes 2 et 3.

12. Terminal informatique selon l'une quelconque des revendications 9 à 11 tel que lesdits moyens logiciels d'impression (2a) comportent des moyens pour imprimer des messages publicitaires dans des emplacements réservés à cet effet, notamment disposés verticalement et/ou dans les marges des pavés et/ou dans le pavé numéro 4.

## Patentansprüche

1. Verfahren zum Verteilen von Informationen, die in einer Informationsdatenbank (1) in einer durch einen Benutzer (5) leicht transportierbaren, handhabbaren und auslesbaren Form enthalten sind, **gekennzeichnet durch** folgende Verfahrensschritte:
- Zerlegung der in der Datenbank (1) enthaltenen Informationen in Einheiten mit jeweils einer Anzahl von vorgegebenen Zeichen;
- Übertragung der genannten Einheiten zu einer an einen Drucker (3b) angeschlossenen Informationseinrichtung (3), und zwar insbesondere über einen Server (2) und ein Informationskommunikationsnetz (6) und/oder über einen Informationsträger, wie beispielsweise eine Compact Disc (4), wobei die Informationseinrichtung und der Drucker (3b) vom Benutzer (5) mittels Steuerorganen, wie einer Tastatur (3g) und/oder einer Maus (3d) zur Aktivierung von gewünschten Menüs bedienbar sind, derart, dass
der Benutzer online auf die genannten Einheiten zugreifen und diejenigen Einheiten, die den Benutzer interessierende Informationen enthalten, auswählen kann sowie den Ausdruck dieser Informationen mit Hilfe des Druckers auf ein Druckmedium, insbesondere auf ein oder mehrere Papierblätter, steuern kann,
wobei das Verfahren als weiteren Schritt das Laden insbesondere mittels einer Compact Disc (4) sowie das Herunterladen insbesondere über das Informationskommunikationsnetz (6) von einer Druckersoftware (2a) in die besagte Informationseinrichtung (3) umfasst, wobei die Druckersoftware (2a) geeignet ist, um mit dem Drucker (3b) ein Memo (7) in Form eines vierseitigen Heftes auszudrucken.

2. Verfahren nach Anspruch 1, **dadurch gekennzeichnet, dass** die Druckersoftware (2a) ein Druckverfahren anwendet, bei welchem jede Einheit auf die Vorderseite eines Blattes in der Weise gedruckt wird, dass
- die in jeder Einheit enthaltenen Zeichen in vier nach der Reihenfolge der Heftseiten von 1 bis 4 nummerierte Blöcke zerlegt werden,
dass die vier Blöcke auf der Vorderseite des Blattes so angeordnet werden,
- sich die Blöcke mit den Nummern 1 und 3 sowie mit den Nummern 2 und 4 jeweils auf jeder der Diagonalen des rechteckigen Blattes befinden, und
- die Blöcke mit den Nummern 2 und 3 im Verhältnis zu den Blöcken mit den Nummern 1 und 4 um 180° gedreht werden,
so dass der Benutzer nach dem Falten ein vierseitiges Heft erhält.

3. Verfahren nach Anspruch 2, **dadurch gekennzeichnet, dass** ausgehend von einem Blatt im Rechteckformat, insbesondere im A4-Format,
- zur Herstellung eines Memos (7b) im Querformat das bedruckte Blatt entlang einer ersten, mittigen, zur größeren Blattseite parallelen Falzlinie (21b) gefaltet wird,
- zur Herstellung eines Memos (7a) im Standardformat das bedruckte Blatt entlang einer ersten, mittigen, zur kleineren Blattseite parallelen Falzlinie (22a) gefaltet wird,
so dass nach dem Falten die erste Falzung die äußeren Seiten der Nummern 1 und 4 mit den inneren Seiten der Nummern 2 und 3 verbindet.

4. Verfahren nach einem der Ansprüche 1 bis 3, **dadurch gekennzeichnet, dass** die Druckersoftware (2a) ein Druckverfahren anwendet, bei welchem Werbenachrichten an für diesen Zweck reservierten Stellen gedruckt werden, die insbesondere vertikal und/oder in den Rändern der Blöcke und/oder im Block Nummer 4 angeordnet sind.

5. System zum Verteilen von Informationen, die in einer Informationsdatenbank (1) in einer Form enthalten sind, in der sie durch einen Benutzer (5) mit Hilfe einer Informationseinrichtung (3) leicht transportiert, gehandhabt und ausgelesen werden können, **dadurch gekennzeichnet, dass** die Informationen in Einheiten mit jeweils einer Anzahl von vorbestimmten Zeichen zerlegt sind, und dass das System ferner folgende Merkmale aufweist:
- einen Server (2), der über ein Informationskommunikationsnetz (6) wie das Internet mit der Datenbank (1) und einer Informationseinrichtung (3) verknüpft ist, derart,
dass der Benutzer online auf besagte Einheiten zugreifen und die Einheiten, die den Benutzer interessierende Informationen enthalten, auswählen kann,
- einen Drucker (3b), der mit der Informationseinrichtung (3) verknüpft ist,
wobei die Informationseinrichtung (3) und der Drucker (3b) vom Benutzer (5) mit Hilfe von Steuerorganen, wie beispielsweise einer Tastatur (3g) und/oder einer Maus (3d) zur Aktivierung von gewünschten Menüs bedienbar sind,
so dass der Benutzer den Ausdruck der genannten Einheiten mit dem Drucker auf ein Druckmedium, insbesondere ein oder mehrere Papierblätter, steuern kann, und dass das System das folgende weitere Merkmal aufweist:
- eine Druckersoftware (2a), die in die Informationseinrichtung (3) insbesondere mittels Compact Disc (4) geladen oder über das Informationskommunikationsnetz (6) herunter geladen werden kann,
wobei die Drucksoftware (2a) geeignet ist, um mit dem Drucker (3b) ein Memo (7) in Form eines vierseitigen Heftes auszudrucken.

6. System nach Anspruch 5, **dadurch gekennzeichnet, dass** die Drucksoftware (2a) Mittel umfasst, um jede Einheit auf die Vorderseite eines Blattes zu drucken, derart, dass
- die in jeder Einheit enthaltenen Zeichen in vier nach der Reihenfolge der Heftseiten von 1 bis 4 nummerierte Blöcke zerlegt sind, und
- die vier Blöcke auf der Vorderseite des Blattes so angeordnet sind, dass sich die Blöcke mit den Nummern 1 und 3 sowie den Nummern 2 und 4 jeweils auf jeder der Diagonalen des rechteckigen Blattes befinden,
derart, dass der Benutzer nach dem Falten ein vierseitiges Heft erhält.

7. System nach Anspruch 6, **dadurch gekennzeichnet, dass** ausgehend von einem Blatt im Rechteckformat, insbesondere im A4-Format,
- zur Herstellung eines Memos (7b) im Querformat das bedruckte Blatt entlang einer ersten, mittigen, zur größeren Blattseite parallelen Falzlinie (21b) gefaltet wird,
- zur Herstellung eines Memos (7a) im Standardformat das bedruckte Blatt entlang einer ersten, mittigen, zur kleineren Blattseite parallelen Falzlinie (22a) gefaltet wird,
so dass nach dem Falten die erste Falzung die äußeren Seiten der Nummern 1 und 4 mit den inneren Seiten der Nummern Seiten 2 und 3 verbindet.

8. System nach einem der Ansprüche 5 bis 7, **dadurch gekennzeichnet, dass** die Druckersoftware (2a) ein Druckverfahren anwendet, bei welchem Werbenachrichten an für diesen Zweck reservierten Stellen gedruckt werden, die insbesondere vertikal und/oder in den Rändern der Blöcke und/oder im Block Nummer 4 angeordnet sind.

9. Informationsterminal, das an ein Informationskommunikationsnetz (6) wie das Interner angeschlossen und zum Verteilen von Informationen ausgebildet ist, die in einer Informationsdatenbank (1) in einer Form enthalten sind, in der sie durch einen Benutzer (5) mit Hilfe des Informationsterminals leicht transportiert und gehandhabt werden können, wobei
die genannten Informationen in Einheiten mit jeweils einer Anzahl von vorbestimmten Zeichen zerlegt sind,
die von der Datenbank (1) stammenden Informationen zu dem Informationsterminal über einen Server (2) und das Informationskommunikationsnetz (6) und/oder über einen Informationsträger, wie beispielsweise eine Compact Disc (4), gelangen,
so dass der Benutzer online auf die genannten Einheiten zugreifen und die Einheiten, die den Benutzer interessierende Informationen enthalten, auswählen kann,
**gekennzeichnet durch** folgende Merkmale:
- eine Informationseinrichtung (3);
- einen mit der Informationseinrichtung (3) verknüpften Drucker,
- wobei die Informationseinrichtung (3) und der Drucker (3b) vom Benutzer (5) mittels Steuerorganen, wie einer Tastatur (3g) und/oder einer Maus (3d) zur Aktivierung gewünschter Menüs bedient werden können, derart, dass
der Benutzer den Ausdruck dieser Informationen mit Hilfe des Druckers auf ein Druckmedium, insbesondere auf ein oder mehrere
Papierblätter, steuern kann,
wobei die Informationseinrichtung (3) ferner eine Druckersoftware (2a) umfasst, die in die Informationseinrichtung (3) insbesondere mittels einer Compact Disc (4) geladen oder insbesondere über das Informationskommunikationsnetz (6)) herunter geladen werden kann, wobei die Druckersoftware (2a) geeignet ist, um mit dem Drucker (3b) ein Memo (7) in Form eines vierseitigen Heftes zu drucken.

10. Informationsterminal nach Anspruch 9, **dadurch gekennzeichnet, dass** die Druckersoftware (2a) Mittel zum Ausdrucken jeder Einheit auf der Vorderseite eines Blattes in der Weise umfasst, dass
- die in jeder Einheit enthaltenen Zeichen in vier nach der Reihenfolge der Heftseiten von 1 bis 4 nummerierte Blöcke zerlegt sind,
- die vier Blöcke auf der Vorderseite jedes Blattes so angeordnet sind, dass sich die Blöcke mit den Nummern 1 und 3 sowie mit den Nummern 2 und 4 jeweils auf jeder der Diagonalen des rechteckigen Blattes befinden, und
- die Blöcke mit den Nummern 2 und 3 im Verhältnis zu den Blöcken mit den Nummern 1 und 4 um 180° gedreht sind,
so dass der Benutzer nach dem Falten ein vierseitiges Heft erhält.

11. Informationsterminal nach Anspruch 10, **dadurch gekennzeichnet, dass** ausgehend von einem Blatt im Rechteckformat, insbesondere im A4-Format,
- zur Herstellung eines Memos (7b) im Querformat das bedruckte Blatt entlang einer ersten, mittigen, zur größeren Blattseite parallelen Falzlinie (21b) gefaltet wird,
- zur Herstellung eines Memos (7a) im Standardformat das bedruckte Blatt entlang einer ersten, mittigen, zur kleineren Blattseite parallelen Falzlinie (22a) gefaltet wird,
so dass nach dem Falten die erste Falzung die äußeren Seiten der Nummern 1 und 4 mit den inneren Seiten der Nummern 2 und 3 verbindet.

12. Informationsterminal nach einem der Ansprüche 9 bis 11, **dadurch gekennzeichnet, dass** die Druckersoftware (2a) Mittel umfasst, um Werbenachrichten an für diesen Zweck reservierten Stellen, die insbesondere vertikal und/oder in den Rändern der Blöcke und/oder im Block Nummer 4 angeordnet sind, zu drucken.

## Claims

1. Process for distributing information contained in a computer database (1) in an easily transportable form that the user (5) can handle, and then throw away;
the said process being **characterised in that** it comprises the following steps:
- the step in which information contained in the database (1) is broken down into units each comprising a predetermined number of symbols,
- the step of transmitting the said units, particularly through a server (2) and a computer communication network (6) and/or through a medium on which the information is saved, for example such as a compact disk (4), to computer equipment (3) connected to a printer (3b); the user (5) activates the said computer equipment (3) and the said printer (3b) by using control devices such as a keyboard (3g) and/or a mouse (3b) to activate optional menus;
such that the user can access the said units on line, can select those containing the information in which he is interested, control printing of these units on a printable medium using a printer, particularly on one or several sheets of paper,
the said process also comprising a step to load (particularly using a compact disk (4)), or download (particularly through the computer communication network (6)) software printing means (2a) capable of controlling a printer (3b) to print a memo (7) in the form of a four-page booklet.

2. Process according to claim 1, such that the said software printing means (2a) use a printing process including the step in which each unit is printed on the front of a sheet
by breaking down the symbols contained in each unit into four frame numbers from 1 to 4 following the order of the pages of the booklet,
by laying out the four frames on the front of the sheet of paper such that frames 1 and 3 are located on one of the diagonals of the rectangular sheet, and frames 2 and 4 are located on the other diagonal,
by rotating frame numbers 2 and 3 by 180° from frame numbers 1 and 4,
such that the user will have a four-page booklet after folding.

3. Process according to claim 2, so as to make a rectangular sheet, particularly an A4 sheet,
a memo (7b) in landscape format, the printed sheet is folded along a first fold line (21b) approximately parallel in the median line parallel to the longest side of the sheet,
a memo (7a) in portrait format, the printed sheet is folded along a first fold line (22a) approximately parallel in the median line parallel to the shortest side of the sheet,
such that after folding, the first fold fixes the outside pages 1 and 4 with the inside pages 2 and 3.

4. Process according to any one of claims 1 to 3, such that the said software printing means (2a) make use of a printing process also comprising a step in which advertising messages are printed in locations set aside for this purpose, particularly arranged vertically and/or in the margins of frames and/or in frame number 4.

5. System for distributing information contained in a computer database (1) in an easily transportable form that a user who has this type of computer equipment (3) can handle and throw away;
the said system being **characterised in that**:
- the said information is broken down into units each with a predetermined number of symbols;
the said system also being **characterised in that** it comprises:
- a server (2) connected through an Internet type computer network (6) to the said database and the said computer equipment (3),
such that the user can access the said units on line and select those containing the information in which he is interested,
- a printer (3b) connected to the said computer equipment (3);
the user (5) activating the said computer equipment (3) and the said printer (3b) by using control devices such as a keyboard (3g) and/or a mouse (3b) to activate optional menus,
such that the user can control printing of the said units on a printable medium, particularly one or several sheets of paper;
the said system also comprising:
- software printout means (2a) that can be loaded (particularly using a compact disk (4)) or downloaded (particularly through the said computer communication network (6)) into the said computer equipment (3);
the said software printing means (2a) being capable of printing a memo (7) in the form of a four-page booklet, using the said printer (3b).

6. System according to claim 5, such that the said software printing means (2a) comprises means of printing each unit on the front of a sheet
by breaking down the symbols contained in each unit into four frame numbers from 1 to 4 in the order of the pages of the booklet,
by laying out the four frames on the front of the sheet of paper such that frames 1 and 3 are located on one of the diagonals of the rectangular sheet, and frames 2 and 4 are located on the other diagonal,
by rotating frame numbers 2 and 3 by 180° from frame numbers 1 and 4.
(such that the user has a four-page booklet after folding).

7. System according to claim 6, in which, starting from a rectangular sheet particularly an A4 size sheet,
a memo (7b) in the landscape format is made, the said printed sheet comprises a first fold line (21b) along the median line parallel to the longest side of the rectangular sheet,
a memo (7a) in the portrait format is made, the said printed sheet comprises a first fold line (22a) along the median line parallel to the shortest side of the rectangular sheet,
such that after folding, the first fold fixes the outside pages 1 and 4 with the inside pages 2 and 3.

8. System according to any one of the previous claims 5 and 7, such that the said software printing means (2a) comprise means of printing advertising messages in the locations set aside for this purpose, particularly arranged vertically and/or in the margins of the frames, and/or in frame number **4**.

9. Computer terminal connected to an Internet type communication network (6) suitable to distribute information contained in a computer database (1) in a form that a user (5) with such a computer terminal can easily transport and handle;
the said information being separated into units each containing a predetermined number of symbols;
the said information arriving at the said computer terminal from the said database (1) through a server (2) and the said computer communication network (6) and/or through an information medium, for example such as a compact disk (4)
such that the user can access the said units on line and select the units that contain the information in which he is interested,
the said computer terminal being **characterised in that** it comprises:
- a computer (3),
- a printer (3b) connected to the said computer equipment (3);
the said computer equipment (3) and the said printer (3b) being activated by the user (5) using control devices such as a keyboard (3g) and/or a mouse (3b) to activate the optional menus,
such that the user can control printing of the said units on a printable medium, and particularly one or several sheets of paper;
the said computer equipment (3) also including software printing means (2a) that can be loaded (particularly from a compact disk (4)) or downloaded (particularly through the said computer communication network (6)) into the said computer; the said software printing means (2a) being capable of controlling the said printer (3b) to print a memo (7) in the form of a four-page booklet.

10. Computer terminal according to claim 9, such that the said software printing means (2a) comprise means of printing each unit on the front of a sheet
by breaking down the symbols contained in each unit into four frame numbers from 1 to 4 in the same order as the number of the pages in the booklet,
by arranging the four frames on the front of the sheet of paper such that frames 1 and 3 are located on one of the diagonals of the rectangular sheet, and frames 2 and 4 are located on the other diagonal,
by rotating frame numbers 2 and 3 by 180° from frame numbers 1 and 4
such that when folding is complete, the user has a four-page booklet.

11. Computer terminal according to claim 10, to make the following from a rectangular sheet, particularly an A4 sheet,
a memo (7b) in the landscape format, the said printed sheet comprises a first fold line (21b) along the median line parallel to the longest side of the rectangular sheet,
a memo (7a) in the portrait format, the said printed sheet comprises a first fold line (22a) along the median line parallel to the shortest side of the rectangular sheet,
such that after folding, the first fold fixes the outside pages 1 and 4 with the inside pages 2 and 3.

12. Computer terminal according to any one of claims 9 to 11 such that the said software printing means (2a) comprise means of printing advertising messages in locations set aside for this purpose, particularly arranged vertically and/or in the margins of the frames and/or in frame number 4.
